# EUROPEAN PATENT SPECIFICATION

(11) **EP 2 869 144 B1**
(45) Date of publication and mention of the grant of the patent: **06.02.2019**
(21) Application number: 13199155.6
(22) Date of filing: 20.12.2013
(51) Int. Cl.: G05B 17/02

(54) **Simulation testing platform for wind power plant and testing method thereof**
Simulationstestplattform für eine Windkraftanlage und Testverfahren dafür
Plateforme de test de simulation pour centrale éolienne et son procédé de test

(30) Priority: 05.11.2013 CN 201310541069
(43) Date of publication of application: 06.05.2015
(73) Proprietor: CRRC Wind Power (Shandong) Co., Ltd., Shandong (CN)
(72) Inventor: Lu, Xiaoping, 250022 Jinan Shandong (CN); Wu, Shuliang, 250022 Jinan Shandong (CN); Zhao, Lei, 250022 Jinan Shandong (CN); Zhang, Haihua, 250022 Jinan Shandong (CN); Yu, Liangfeng, 250022 Jinan Shandong (CN); Cui, Dongming, 250022 Jinan Shandong (CN)
(74) Representative: J A Kemp

(56) References cited:
- WO-A1-2011/150941
- US-A1- 2006 113 801
- HOOFT EN AL V: "Real time process simulation for evaluation of wind turbine control systems", INTERNET CITATION, 14 August 2008 (2008-08-14), pages 1-4, XP008095362, Retrieved from the Internet: URL:http://www.ecn.nl/docs/library/report/ 2003/rx03043.pdf [retrieved on 2008-08-14]
- RUDION K ET AL: "MaWind - tool for the aggregation of wind farm models", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 July 2008 (2008-07-20), pages 1-8, XP031304056, ISBN: 978-1-4244-1905-0

## Description

### FIELD OF THE TECHNOLOGY

The present invention relates to wind power technology, in particular to a simulation testing platform for a wind power plant, particularly a management system of the wind power plant, and a testing method thereof.

### BACKGROUND

Now, wind power generation is considered to be one of the major solutions for solving energy, environmental and financial crisis existing worldwide currently. There is plenty of wind power resource in China and the wind power industry has been developing rapidly for these years. Since 2011, China has been leading the world in newly increased and total installed capacity. Due to the characteristics of intermittence and fluctuation of wind power, if a great deal of wind power is provided to a power grid, the power grid can be affected greatly. The frequency of the power grid will be affected by the fluctuation of active power, and the voltage of the power grid will be affected by the fluctuation of reactive power. As a result of the poor grid transmission capacity and the poor adjustability of wind power plant in China, wind power was abandoned in great extent recent years, which leads to huge squandering of resources. The wind power plant should be provided with a wind power plant monitoring system, a wind power plant power management system (including wind power plant active control and reactive control functions), a wind power plant power prediction system, etc, in order to improve the unified management of the wind power plant output and increase the utilization rate of the wind power plant. In general, when a system is developed, testing for functionality and reliability of the system should be conducted; however, there is still an absence of a testing platform for the wind power plant management system. Most software are installed to the wind power plant directly after model validation, which leads to higher cost of developing and debugging of the system and greater operation risk of the system.

HOOFT EN AL V: "Real time process simulation for evaluation of wind turbine control systems", INTERNET CITATION, 14 August 2008 (2008-08-14), pages 1-4, XP008095362 discloses a simulation testing platform of a wind power plant, comprising an operator, a process simulator, a wind turbine control system and physical systems and components, which communicate with each other.

US 2006/113801A1 discloses a method for a functional test of a wind turbine generator plant, the method operating with a control unit and at least one simulation unit.

WO 2011/150941A1 discloses a test device and method of testing a wind power plant component, such as a wind power plant controller. The test device includes one or more subsystem simulators that cooperate to provide a system level simulation of a wind power plant. The method includes connecting the wind power plant controller to the test device, and testing the wind power plant controller.

### SUMMARY

In order to overcome the defects in the above-mentioned technology, the present invention provides a simulation testing platform for wind power plant and a testing method thereof, which have higher reliability and enable more comprehensive test.

The present invention is embodied through the following technical solutions:

The simulation testing platform for a wind power plant according to the present invention includes an upper computer, a wind power plant simulation machine and a wind power plant management system prototype, which communicate with each other;

A mathematical model of a wind power plant system is established in the wind power plant simulation machine for simulating the status and operation data of the wind power plant in real time according to the set parameters sent by the upper computer and control orders sent by the wind power plant management system prototype, wherein the mathematical model includes a wind field model, a wind turbine model, a current collection and boost device model, a reactive compensation device model and a power grid model, and the wind field model takes account of the influence of wake effect;

The wind power plant management system prototype is configured to generate a real wind power plant management system to be tested, and includes a wind power plant monitoring system, a power management system, a wind power prediction system and a communication system, and sends control orders for each wind turbine and reactive compensation device to the wind power plant simulation machine according to orders sent by the power grid and the current status of the wind power plant;

The upper computer is configured to set test working conditions and the control parameters of the mathematical model, and send them to the wind power plant simulation machine at the beginning of the test; monitor and store real time operation data of the wind power plant simulation machine and the wind power plant prototype during testing; analyze and process the stored operation data, and perform performance evaluation when the test is finished.

The testing method of the simulation testing platform for the wind power plant according to the present invention including:

step 1, establishing a mathematical model of a wind power plant system based on parameters of the wind power plant system to be tested, and downloading the mathematical model to the wind power plant simulation machine, wherein the mathematical model includes a wind field model, a wind turbine model, a current collection and boost device model, a reactive compensation device model and a power grid model, and the wind field model takes account of the influence of wake effect;

step 2, configuring a corresponding wind power plant management system prototype based on the wind power plant management system to be tested, and connecting the wind power plant management system prototype to the wind power plant simulation machine through communication interface;

step 3, connecting the wind power plant management system prototype to the upper computer and the wind power plant simulation machine to the upper computer in the way of communication, setting, in the upper computer, working conditions to be tested, configuring parameters of the mathematical model of the wind power plant system, and sending the parameters to the wind power plant simulation machine;

step 4, performing simulation and testing, wherein, the mathematical model of the wind power plant is running in the simulation machine, a wind plant management software is running in the wind power plant management system prototype, while a monitoring program with graphic interfaces is running in the upper computer to monitor the wind power plant simulation machine and the wind power plant management system prototype, record and store relevant operation data automatically;

step 5, processing and analyzing the recorded operation data by the upper computer when the test is finished, to obtain evaluation of overall performance of the wind power plant management system to be tested.

The mathematical model of the wind power plant system in step 1 is established by an equivalent modeling method, in which multiple wind turbines with the same configuration and status are equated to one turbine model, correspondently, wind turbine models are driven with equivalent wind speed.

In step 2 and step 3, the upper computer communicates with the wind power plant simulation machine and the wind power plant management system prototype through TCP/IP protocol, the wind power plant simulation machine communicates with the wind power plant management system prototype through ModBus protocol.

The present invention has advantages that: it is possible to simulate the operation working conditions, turbine status and communication interfaces authentically, test the software and hardware of the wind power plant management system in a laboratory during developing, and reduce the period and cost of the system development; it is also possible to reproduce the working conditions of the scene including fault and extreme working conditions, reduce the cost of upgrading and maintenance in a later stage; and the wind power plant model is built using the equivalent modeling and status classification method, which may raise the operating rate and reduce the hardware cost.

### BRIEF DESCRIPTION OF THE DRAWINGS

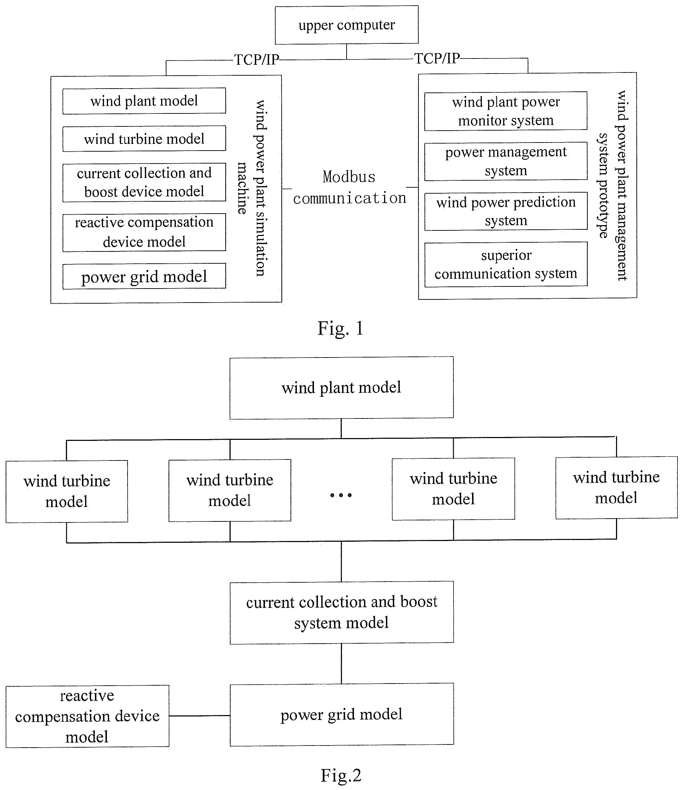

Figure 1 shows the block diagram of the mechanism according to the present invention;
Figure 2 shows the block diagram of the constitution of the mathematical model of the short-term and long-term power according to the weather information and the status of the wind power plant. Software and hardware of the prototype can be configured and expanded flexibly, so that most current wind power plant management systems can come true rapidly. All or part of the prototype can also employ the real wind power plant management system. Currently, the present wind power plant management system communicates generally with the wind turbines in the manner of ModBus, therefore, the simulation machine of the platform also communicates with the wind power plant management system in the manner of ModBus. There are still other communication interfaces in the simulation machine so as to accommodate other mainstream communication protocols.

The wind power plant simulation machine is mainly used for the simulation of the wind power plant, and can be a high-speed computer, industrial control unit, PLC or specified simulator. A real-time simulation mathematical model of the wind power plant established base on the parameters of real wind plant is running in the simulation machine. As shown in figure 2, the mathematical model of the wind power plant system includes wind field model, wind turbine model, current collection and boost device model, reactive compensation device model and power grid model. The mathematical model of the wind power plant system is established by an equivalent modeling method, in which multiple wind turbine models with the same configuration and status are equated to the same turbine model, the same wind turbine models are driven with equivalent wind speed. It is possible to simulate the wind turbine models in various statuses by a high performance simulation machine with multi-core or multiple simulation machines.

The upper computer is used for setting test working conditions and configuring parameters of the mathematical model of the wind power plant system at the beginning of the test and sending them to the wind power plant simulation machine; monitoring and storing real time operation data of the wind power plant simulation machine and the wind power plant management system prototype during testing; analyzing and processing the stored operation data and performing performance evaluation when the test is finished. The working conditions set by the upper computer include, for example, normal, fault and extreme working conditions, which may happen during the actual operation of the wind power plant, and meanwhile, it is possible to set, by way of batching, a series of process documents of working conditions which can be automatically executed; the model parameters set in the upper computer include most parameters required for wind power plant modeling, such as wind field model parameters, wind turbine model parameters, current collection and boost device model parameters, reactive compensation device model parameters and power grid model parameters. The analysis software in the upper computer is capable of processing and estimating data, which means that the software can post-process the test result, and make some simple estimation based on preset limiting values.

The testing method of the simulation testing platform of the wind power plant according to the present invention includes:
Step 1, establishing a mathematical model of a wind power plant system based on the parameters the wind power plant system to be tested, and downloading the mathematical model to the wind power plant simulation machine; the mathematical model of the wind power plant system including wind field model, wind turbine model, current collection and boost device model, reactive compensation device model and power grid model. The mathematical model of the wind power plant system is established by an equivalent modeling method, in which multiple wind turbine models with the same configuration and status are equated to a same turbine model, the wind turbine models are driven with equivalent wind speed.
Step 2, configuring a corresponding wind power plant management system prototype based on the wind power plant management system to be tested, and connecting the wind power plant management system prototype to the wind power plant simulation machine through communication interface;
Step 3, connecting the wind power plant management system prototype and the wind power plant simulation machine to the upper computer in the way of communication, setting, in the upper computer working conditions to be tested, configuring parameters of the mathematical model of the wind power plant system, and sending the parameters to the wind power plant simulation machine;
Step 4, performing simulation and testing, wherein the mathematical model of the wind power plant is running in the simulation machine, the wind plant management software is running in the wind power plant management system prototype, while a monitoring program with graphic interfaces is running in the upper computer to monitor the wind power plant simulation machine and the wind power plant management system prototype, record and store relevant operation data automatically;
Step 5, processing and analyzing the recorded operation data by the upper computer when the testing is finished, to obtain evaluation of overall performance of the wind power plant management system to be tested.

The mathematical model of the wind power plant system includes wind field model, wind turbine model, current collection and boost device model, reactive compensation device model and power grid model, etc. The wind field model includes speed and direction data of wind in the whole wind plant, and also takes account of the influence of wake effect; the current collection and boost device model includes cable jumper, power switch, transformer, etc; the power grid model includes power grid characteristics, wind power plant access point characteristics, etc; the wind turbine model includes aerodynamics unit, drive unit, power conversion unit, dynamics unit, controlling unit, etc.

The difference between the wind turbine models should be considered during the modeling of the wind power plant, which is reflected in the configuration and operating status of the turbines. A large-scale wind power plant may include dozens or hundreds of wind turbines and the cost will be tremendous if every turbine is modeled. In order to simplify computation, the wind power plant is modeled in an equivalent modeling method. In the method, multiple wind turbines with the same configuration and status are equated to one turbine model, and the wind turbine models are driven with equivalent wind speed. The statuses of the wind turbines mainly includes closing down, critical status, power reduction status, high wind speed status, low wind speed status. No simulation is performed in the closing down status. The turbines can be divided into four kinds according to the statuses, and all of the turbines can be simulated using a multi-core simulation machine or several single-core simulation machines.

### The first kind: critical status

The critical turbines need to be closed down in case of reaching the critical range of safety operation, such as the temperature of the electric generator being too high or the vibration of the turbines exceeding the safety range, etc. The amount of this kind of turbines is relatively small in the wind power plant with good operating and maintaining conditions.

### The second kind: power reduction status

This kind of turbines has very high temperature or severe vibration but does not reach the extreme status. In order to keep the turbines operating safely and reliably, the active output of the turbines should be reduced, so as to keep the turbines in normal operating conditions. Therefore, the output power of this kind of turbines can be reduced to meet its operating requirement.

### The third kind: low wind speed status

This kind of wind turbines is operating in the constant power factor region or constant rotate speed region. The speed of turbines can be reduced through controlling electromagnetic torque to reduce captured wind energy. Comparing with the forth kind of wind turbines, this kind of turbines is quicker in action and has lower inertia time constant, which can respond the system requirements quickly.

### The forth kind: high wind speed status

Wind speed goes beyond the rated value for this kind of turbines, which is operating in the constant power region and outputting the rated power. The power regulation may be achieved by mechanical controlling of the pitch angle, thus the inertia time constant is large, mostly more than 0.1s.

The operation principle of the simulation testing platform of the wind power plant is as follows. At the beginning of testing, the working conditions of the entire testing and the wind power plant model parameters in the simulation machine are set in the upper computer. The wind power plant simulation machine configures the parameters of the wind plant, wind turbines, power grid model, etc, according to the parameters sent by the upper computer. During the testing, the wind power plant management system reads the status signals and operation data of the entire wind power plant in real time, and simultaneously computes the active and reactive orders of each turbine according to the dispatch orders of the superior power grid and the operation status of the current wind power plant, and sends them to each turbine of the wind power plant. The turbine models in the wind power plant simulation machine perform the operations of start, stop, power increase, power reduction, reset, etc, on the basis of control orders sent by the wind power plant management system, and simulate and compute the status data of new period to achieve closed loop operation in real time. The upper computer records the operation data of the wind power plant simulation machine and the wind power plant management system during the entire testing period in real time, and displays the operation data on the graphic interface. The analysis software in the upper computer can analyze and process the testing result, evaluate the performance of the wind power plant management system.

The above descriptions are merely preferable embodiments of the present invention. It should be noted that, for those of ordinary skill in the art, modifications and displacements can be made to the technical solutions without departing from the scope of the present invention, and the modifications and displacements are also deemed to be within the scope of the present invention.

## Claims

1. A simulation testing platform for a wind power plant, comprising an upper computer, a wind power plant simulation machine and a wind power plant management system prototype, which communicate with each other; wherein
a mathematical model of a wind power plant system is established in the wind power plant simulation machine, for simulating status and operation data of the wind power plant in real time according to control parameters sent by the upper computer and adjustment orders sent by the wind power plant management system prototype, wherein the mathematical model includes a wind field model, a wind turbine model, a current collection and boost device model, a reactive compensation device model and a power grid model, and the wind field model takes account of the influence of wake effect;
the wind power plant management system prototype is configured to generate a real wind power plant management system to be tested, and includes a wind power plant monitoring system, a power management system, a wind power prediction system and a communication system, and transmits the adjustment orders for each wind turbine and reactive compensation device to the wind power plant simulation machine according to orders sent by a power grid and a current status of the wind power plant;
the upper computer is configured to set test working conditions and the control parameters of the mathematical model and send them to the wind power plant simulation machine, at beginning of a test; monitor and store real time operation data of the wind power plant simulation machine and the wind power plant management system prototype during the test; analyze and process the stored operation data and perform performance evaluation when the test is finished.

2. A testing method of the simulation testing platform for the wind power plant of claim 1, comprising:
step 1, establishing a mathematical model of a wind power plant system based on the parameters of the wind power plant system to be tested, and downloading the mathematical model to the wind power plant simulation machine, wherein the mathematical model includes a wind field model, a wind turbine model, a current collection and boost device model, a reactive compensation device model and a power grid model, and the wind field takes account of the influence of wake effect;
step 2, configuring a corresponding wind power plant management system prototype based on the wind power plant management system to be tested, and connecting the wind power plant management system prototype to the wind power plant simulation machine through communication interface;
step 3, connecting the wind power plant management system prototype to the upper computer and the wind power plant simulation machine to the upper computer in the way of communication, setting, in the upper computer, working conditions to be tested, configuring parameters of the mathematical model of the wind power plant system, and sending the parameters to the wind power plant simulation machine;
step 4, performing simulation and testing, wherein, the mathematical model of the wind power plant is running in the simulation machine, a wind plant management software is running in the wind power plant management system prototype, while a monitoring program with graphic interfaces is running in the upper computer to monitor the wind power plant simulation machine and the wind power plant management system prototype, record and store relevant operation data automatically;
step 5, processing and analyzing the recorded operation data by the upper computer when the test is finished, to obtain evaluation of overall performance of the wind power plant management system to be tested.

3. The testing method of the simulation testing platform for the wind power plant according to claim 2, wherein the mathematical model of the wind power plant system in step 1 is established by an equivalent modeling method, in which multiple wind turbines with the same configuration and status are equated to one turbine model, correspondently, wind turbine models are driven with equivalent wind speed.

4. The testing method of the simulation testing platform for the wind power plant according to claim 2, wherein in step 1, in order to ensure the real-time of the simulating and testing, the simulation model in the wind power plant simulation machine is running in a real-time system; the model can be a language writing model with high instantaneity, or a specialized simulation software writing model, which can be converted into real-time code capable of running in the simulation machine.

5. The testing method of the simulation testing platform for the wind power plant according to claim 2, wherein in step 2 and step 3, the upper computer communicates with the wind power plant simulation machine and the wind power plant management system prototype through TCP/IP protocol, and the wind power plant simulation machine communicates with the wind power plant management system prototype through ModBus protocol.

## Patentansprüche

1. Simulationsprüfplattform für eine Windenergieanlage, umfassend einen oberen Computer, eine Windenergieanlagen-Simulationsmaschine und einen Prototyp eines Windenergieanlagen-Managementsystems, die miteinander kommunizieren; wobei
ein mathematisches Modell eines Windenergieanlagensystems in der Windenergieanlagen-Simulationsmaschine etabliert ist, um Zustands- und Betriebsdaten der Windenergieanlage in Echtzeit gemäß den vom oberen Computer gesendeten Steuerungsparametern und den vom Prototyp des Windenergieanlagen-Managementsystems gesendeten Anpassungsbefehlen zu simulieren, wobei das mathematische Modell ein Windfeldmodell, ein Windturbinenmodell, ein Stromabnahme- und Stromverstärkungsmodell, ein reaktives Kompensationsvorrichtungsmodell und ein Stromnetzmodell beinhaltet und das Windfeldmodell den Einfluss des Nachlaufeffekts berücksichtigt;
der Windenergieanlagen-Managementsystemprototyp konfiguriert ist, um ein realistisches Windenergieanlagen-Managementsystem zu erzeugen, das geprüft werden soll, und ein Windenergieanlagen-Überwachungssystem, ein Energiemanagementsystem, ein Windenergievorhersagesystem und ein Kommunikationssystem beinhaltet, und die Anpassungsbefehle für jede Windenergieanlage und reaktive Kompensationsvorrichtung an die Windenergieanlagen-Simulationsmaschine gemäß den von einem Stromnetz gesendeten Befehlen und einem aktuellen Status der Windenergieanlage überträgt;
der obere Computer konfiguriert ist, um die Prüfarbeitsbedingungen und die Steuerparameter des mathematischen Modells einzustellen und sie bei Beginn einer Prüfung an die Windenergieanlagen-Simulationsmaschine zu senden; um Echtzeit-Betriebsdaten der Windenergieanlagen-Simulationsmaschine und des Windenergieanlagen-Managementsystemprototyps während der Prüfung zu überwachen und zu speichern; um die gespeicherten Betriebsdaten zu analysieren und zu verarbeiten und um eine Leistungsbewertung durchzuführen, nachdem die Prüfung beendet ist.

2. Prüfverfahren der Simulationsprüfplattform für die Windenergieanlage nach Anspruch 1, umfassend:
Schritt 1, Erstellen eines mathematischen Modells eines Windenergieanlagensystems basierend auf den Parametern des zu prüfenden Windenergieanlagensystems und Herunterladen des mathematischen Modells auf die Windenergieanlagen-Simulationsmaschine, wobei das mathematische Modell ein Windfeldmodell, ein Windturbinenmodell, ein Stromabnahme- und Stromverstärkungsmodell, ein reaktives Kompensationsvorrichtungsmodell und ein Stromnetzmodell beinhaltet und das Windfeld den Einfluss des Nachlaufeffekts berücksichtigt;
Schritt 2, Konfigurieren eines entsprechenden Windenergieanlagen-Managementsystemprototyps beruhend auf dem zu prüfenden Windenergieanlagen-Managementsystem und Verbinden des Windenergieanlagen-Managementsystemprototyps mit der Windenergieanlagen-Simulationsmaschine über eine Kommunikationsschnittstelle;
Schritt 3, Verbinden des Windenergieanlagen-Managementsystemprototyps mit dem oberen Computer und der Windenergieanlagen-Simulationsmaschine mit dem oberen Computer im Wege einer Kommunikation, Einstellen von zu prüfenden Arbeitsbedingungen im oberen Computer, Konfigurieren von Parametern des mathematischen Modells des Windenergieanlagensystems und Senden der Parameter an die Windenergieanlagen-Simulationsmaschine;
Schritt 4, Ausführen von Simulation und Prüfung, wobei das mathematische Modell der Windenergieanlage in der Simulationsmaschine läuft, eine Windenergieanlagen-Managementsoftware im Windenergieanlagen-Managementsystemprototyp läuft, während im oberen Computer ein Überwachungsprogramm mit grafischen Schnittstellen läuft, um die Windenergieanlagen-Simulationsmaschine und den Windenergieanlagen-Managementsystemprototypen zu überwachen, relevante Betriebsdaten automatisch aufzuzeichnen und zu speichern;
Schritt 5, Verarbeiten und Analysieren der aufgezeichneten Betriebsdaten durch den oberen Computer, wenn die Prüfung beendet ist, um eine Bewertung der Gesamtleistung des zu prüfenden Windenergieanlagen-Managementsystems zu erlangen.

3. Prüfverfahren der Simulationsprüfplattform für die Windenergieanlage nach Anspruch 2, wobei das mathematische Modell des Windenergieanlagensystems in Schritt 1 durch ein äquivalentes Modellierungsverfahren erstellt wird, bei dem vielfache Windenergieanlagen mit der gleichen Konfiguration und dem gleichen Status einem Turbinenmodell gleichgesetzt werden, entsprechend werden Windturbinenmodelle mit äquivalenter Windgeschwindigkeit betrieben.

4. Prüfverfahren der Simulationsprüfplattform für die Windenergieanlage nach Anspruch 2, wobei in Schritt 1, das Simulationsmodell in der Windenergieanlagen-Simulationsmaschine in einem Echtzeitsystem läuft, um die Echtzeit der Simulation und Prüfung sicherzustellen; das Modell ein Sprachschreibmodell mit hoher Sofortigkeit oder ein spezielles Simulationssoftware-Schreibmodell, das in einen Echtzeitcode umgewandelt werden kann, der in der Simulationsmaschine laufen kann, sein kann.

5. Prüfverfahren der Simulationsprüfplattform für die Windenergieanlage nach Anspruch 2, wobei in Schritt 2 und Schritt 3 der obere Computer mit der Windenergieanlagen-Simulationsmaschine und dem Windenergieanlagen-Managementsystemprototypen über das TCP/IP-Protokoll kommuniziert und die Windenergieanlagen-Simulationsmaschine mit dem Windenergieanlagen-Managementsystemprototypen über das ModBus-Protokoll kommuniziert.

## Revendications

1. Plateforme de réalisation d'essais de simulation pour une centrale éolienne, comprenant un ordinateur supérieur, une machine de simulation de centrale éolienne et un prototype de système de gestion de centrale éolienne, qui communiquent les uns avec les autres ; dans laquelle
un modèle mathématique d'un système de centrale éolienne est établi dans la machine de simulation de centrale éolienne, pour simuler des données d'état et de fonctionnement de la centrale éolienne en temps réel selon des paramètres de commande envoyés par l'ordinateur supérieur et des instructions d'ajustement envoyées par le prototype de système de gestion de centrale éolienne, dans laquelle le modèle mathématique inclut un modèle de champ de vent, un modèle de turbine éolienne, un modèle de dispositif de collecte et d'augmentation de courant, un modèle de dispositif de compensation réactif et un modèle de réseau électrique, et le modèle de champ de vent prend en compte l'influence d'effet de sillage ;
le prototype de système de gestion de centrale éolienne est configuré pour générer un système réel de gestion de centrale éolienne sur lequel des essais doivent être réalisés, et inclut un système de gestion de centrale éolienne, un système de gestion de puissance, un système de prédiction d'énergie éolienne et un système de communication, et transmet les instructions d'ajustement pour chaque turbine éolienne et dispositif de compensation réactif à la machine de simulation de centrale éolienne selon des instructions envoyées par un réseau électrique et un état actuel de la centrale éolienne ;
l'ordinateur supérieur est configuré pour régler des conditions de fonctionnement d'essai et les paramètres de commande du modèle mathématique et les envoyer à la machine de simulation de centrale éolienne, au début d'un essai ; surveiller et stocker des données de fonctionnement en temps réel de la machine de simulation de centrale éolienne et du prototype de système de gestion de centrale éolienne durant l'essai ; analyser et traiter les données de fonctionnement stockées et réaliser une évaluation de performances lorsque l'essai est fini.

2. Procédé de réalisation d'essais de la plateforme de réalisation d'essais de simulation pour la centrale éolienne de la revendication 1, comprenant :
étape 1, l'établissement d'un modèle mathématique d'un système de centrale éolienne sur la base des paramètres du système de centrale éolienne sur lequel des essais doivent être réalisés, et le téléchargement du modèle mathématique sur la machine de simulation de centrale éolienne, dans lequel le modèle mathématique inclut un modèle de champ de vent, un modèle de turbine éolienne, un modèle de dispositif de collecte et d'augmentation de courant, un modèle de dispositif de compensation réactif et un modèle de réseau électrique, et le champ de vent prend en compte l'influence d'effet de sillage ;
étape 2, la configuration d'un prototype correspondant de système de gestion de centrale éolienne sur la base du système de gestion de centrale éolienne sur lequel des essais doivent être réalisés, et la connexion du prototype de système de gestion de centrale éolienne à la machine de simulation de centrale éolienne par l'intermédiaire d'une interface de communication ;
étape 3, la connexion du prototype de système de gestion de centrale éolienne à l'ordinateur supérieur et de la machine de simulation de centrale éolienne à l'ordinateur supérieur en communication, le réglage, dans l'ordinateur supérieur, de conditions de fonctionnement sur lesquelles des essais doivent être réalisés, la configuration de paramètres du modèle mathématique du système de centrale éolienne, et l'envoi des paramètres à la machine de simulation de centrale éolienne ;
étape 4, la réalisation de simulation et d'essais, dans lequel, le modèle mathématique de la centrale éolienne est exécuté dans la machine de simulation, un logiciel de gestion de centrale éolienne est exécuté dans le prototype de système de gestion de centrale éolienne, alors qu'un programme de surveillance avec des interfaces graphiques est exécuté dans l'ordinateur supérieur pour surveiller la machine de simulation de centrale éolienne et le prototype de système de gestion de centrale éolienne, enregistrer et stocker des données de fonctionnement pertinentes automatiquement ;
étape 5, le traitement et l'analyse des données de fonctionnement enregistrées, par l'ordinateur supérieur, lorsque l'essai est fini, pour obtenir une évaluation des performances d'ensemble du système de gestion de centrale éolienne sur lequel des essais doivent être réalisés.

3. Procédé de réalisation d'essais de la plateforme de réalisation d'essais de simulation pour centrale éolienne selon la revendication 2, dans lequel le modèle mathématique du système de centrale éolienne dans l'étape 1 est établi par une méthode de modélisation équivalente, dans laquelle de multiples turbines éoliennes avec la même configuration et le même état sont assimilées à un modèle de turbine, de façon correspondante, des modèles de turbine éolienne sont entraînés avec une vitesse de vent équivalente.

4. Procédé de réalisation d'essais de la plateforme de réalisation d'essais de simulation pour centrale éolienne selon la revendication 2, dans lequel dans l'étape 1, afin de garantir le temps réel de la réalisation de simulation et d'essais, le modèle de simulation dans la machine de simulation de centrale éolienne est exécuté dans un système en temps réel ; le modèle peut être un modèle d'écriture de langage à haute instantanéité, ou un modèle d'écriture de logiciel de simulation spécialisé, qui peut être converti en code en temps réel capable d'être exécuté dans la machine de simulation.

5. Procédé de réalisation d'essais de la plateforme de réalisation d'essais de simulation pour centrale éolienne selon la revendication 2, dans lequel dans l'étape 2 et l'étape 3, l'ordinateur supérieur communique avec la machine de simulation de centrale éolienne et le prototype de système de gestion de centrale éolienne par l'intermédiaire de protocole TCP/IP, et la machine de simulation de centrale éolienne communique avec le prototype de système de gestion de centrale éolienne par l'intermédiaire de protocole ModBus.
